# EUROPEAN PATENT APPLICATION

(11) **EP 3 896 194 A1**
(43) Date of publication of application: **20.10.2021**
(21) Application number: 21178445.9
(22) Date of filing: 10.06.2013
(51) Int. Cl.: C23C 22/83, C09D 5/00, C09D 5/08, C09D 5/12, C23C 22/84, C23F 11/08, C23F 11/18, G01N 21/64, G01N 21/80, C23C 22/34, C23C 22/60, C23C 22/68, C09D 5/29, C09D 7/41, C09D 7/48, C09D 7/63, G01N 31/22

(54) **INDICATOR COATINGS FOR METAL SURFACES**

(30) Priority: 08.06.2012 US 201261657497 P
(62) Divisional of application: 13732312.7
(71) Applicant: PRC-Desoto International, Inc., Sylmar, California 91342 (US)
(72) Inventor: MORRIS, Eric L., Murrieta, California 92563 (US)
(74) Representative: f & e patent

(57) **Abstract**

Methods and compositions for treating a substrate are provided. The composition contains a corrosion-inhibiting metal cation and a conjugated compound.

## Description

### FIELD OF THE INVENTION

The present invention relates to coating compositions comprising a corrosion-inhibiting metal cation and a conjugated compound. Methods of using the coatings and substrates coated therewith are also within the scope of the present invention.

### BACKGROUND OF THE INVENTION

The oxidation and degradation of metals used in aerospace, commercial, and private industries are a serious and costly problem. To minimize the oxidation and degradation of the metals used in these applications, an inorganic protective coating can be applied to the metal substrate. This inorganic protective coating, sometimes referred to as a conversion coating, may be the only coating applied to the metal, or the coating can be an intermediate coating to which subsequent coatings are applied.

One of the problems faced by manufacturers when coating the surface of a metal substrate to minimize corrosion is that the surface must be adequately coated for optimum performance. It is difficult, particularly when coating large metal parts, such as in aerospace applications, to determine whether the metal substrate has been adequately coated in all areas. Coatings that allow the user to determine coating coverage, as well as contribute to corrosion resistance and/or other coating performance parameters, are therefore desired.

### SUMMARY OF THE INVENTION

The present invention is directed to a composition comprising: a) a corrosion-inhibiting metal cation; and b) a conjugated compound. Methods for using such compositions and substrates treated therewith are also within the scope of the present invention.

### DETAILED DESCRIPTION OF THE INVENTION

The present invention is directed to compositions comprising a corrosion-inhibiting metal cation and a conjugated compound. In certain embodiments, the compositions further comprise a carrier, such as an aqueous medium, so that the composition is in the form of a solution or dispersion of the metal cation, the conjugated compound, and/or other composition components in the carrier. These compositions may sometimes be referred to herein as coatings, because they can be used to "coat" a substrate and form a layer on that substrate; the layer may be either continuous or not continuous.

The metal cation used according the present invention can be any metal cation that contributes to corrosion resistance. For example, the metal cation may be a rare earth element, such as cerium, yttrium, praseodymium, neodymium, or a combination thereof. Other metal cations include zirconium, Group IA metal cations, such as lithium, sodium, potassium, rubidium, cesium, and francium, or Group IIA metal cations such as beryllium, magnesium, calcium, strontium, barium, and radium, Group 2B metal ions such as zinc, Group IVB metals such as titanium, and tri-valent chromium. As used herein, the term "rare earth metal" refers to seventeen (17) chemical elements in the periodic table that includes the fifteen (15) lanthanoids (the fifteen [15] elements with atomic numbers 57 through 71, from lanthanum to lutetium) plus scandium and yttrium. Where applicable, the metal itself may be used. In certain embodiments, a rare earth metal compound is used as the source of the rare earth metal. As used herein, the term "rare earth metal compound" refers to compounds that include at least one element that is a rare earth element as defined above. Particularly suitable metal cations according to the present invention include cerium, yttrium, praseodymium, zirconium, lithium, and zinc.

In certain embodiments the metal cation used in the present compositions is in the form of a metal salt. The term "salt" means an ionically bonded inorganic compound and/or the ionized anion and cation of one or more inorganic compounds in solution. Suitable salts include, for example, nitrate, chloride, and sulfate salts, as well as carbonates and hydroxides. Examples include praseodymium chloride, praseodymium nitrate, praseodymium sulfate, cerium chloride, cerium nitrate, cerium sulfate, cerous nitrate, yttrium chloride, yttrium nitrate, yttrium sulfate, zinc fluoride, hexafluorozirconate, lithium carbonate, lithium hydroxide, and combinations thereof.

In certain embodiments, the metal cation is present in the composition in an amount of at least 10 ppm metal, such as at least 100 ppm metal or 150 ppm metal (measured as elemental metal), and no more than 5000 ppm metal, such as no more than 300 ppm metal or not more than 250 ppm metal. The amount of metal cation can range between any of these recited values, inclusive of the recited values.

A "conjugated compound" as used herein, and as will be understood by those skilled in the art, refers to a compound having two double bonds separated by a single bond, for example two carbon-carbon double bonds with a single carbon-carbon bond between them. Any conjugated compound can be used according to the present invention. Certain "indicators" or "indicator compounds", so named because they indicate, for example, the presence of a chemical species, such as a metal ion, the pH of a composition, and the like, are conjugated compounds. An "indicator", "indicator compound", and like terms as used herein refer to a compound that changes color in response to some external stimulus, parameter, or condition, such as the presence of a metal ion, or in response to a specific pH or range of pHs.

The indicator compound used according to certain embodiments of the present invention can be any indicator known in the art that indicates the presence of a species, a particular pH, and the like. For example, a suitable indicator may be one that changes color after forming a metal ion complex with a particular metal ion. The metal ion indicator is generally a highly conjugated organic compound. Similarly, the indicator compound can be one in which the color changes upon change of the pH; for example, the compound may be one color at an acidic or neutral pH and change color in an alkaline pH, or vice versa. Such indicators are well known and widely commercially available. An indicator that "changes color when exposed to an alkaline pH" therefore has a first color (or is colorless) when exposed to an acidic or neutral pH and changes to a second color (or goes from colorless to colored) when exposed to an alkaline pH. Similarly, an indicator that "changes color when exposed to an acidic pH" goes from a first color/colorless to a second color/colored when the pH changes from alkaline/neutral to acidic.

Examples of such indicator compounds include methyl orange, xylenol orange, catechol violet, bromophenol blue, green and purple, eriochrome black T, Celestine blue, hematoxylin, calmagite, gallocyanine, and combinations thereof. According to one embodiment, the indicator compound comprises an organic indicator compound that is a metal ion indicator. Exemplary indicator compounds include those found in Table I. Fluorescent indicators, which will emit light in certain conditions, can also be used according to the present invention, although in certain embodiments the use of a fluorescent indicator is specifically excluded. That is, in certain embodiments, conjugated compounds that exhibit fluorescence are specifically excluded. As used herein, "fluorescent indicator" and like terms refers to compounds, molecules, pigments, and/or dyes that will fluoresce or otherwise exhibit color upon exposure to ultraviolet or visible light. To "fluoresce" will be understood as emitting light following absorption of light or other electromagnetic radiation. Examples of such indicators, often referred to as "tags", include acridine, anthraquinone, coumarin, diphenylmethane, diphenylnaphthlymethane, quinoline, stilbene, triphenylmethane, anthracine and/or molecules containing any of these moieties and/or derivatives of any of these such as rhodamines, phenanthridines, oxazines, fluorones, cyanines and/or acridines.

**TABLE I.**

| **Compound** | **Structure** | **CAS Reg. No.** |
|---|---|---|
| **Catechol Violet** | 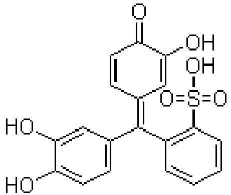 | 115-41-3 |
| Synonyms: | | |
| Catecholsulfonphthalein; Pyrocatecholsulfonephthalein; Pyrocatechol Violet | | |
| **Xylenol Orange** | 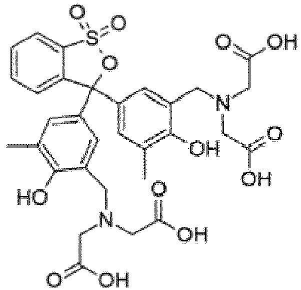 | 3618-43-7 |
| Synonym: | | |
| 3,3'-Bis[*N*,*N-*bis(carboxymethyl)aminomethyl]-*o*-cresolsulfonephthalein tetrasodium salt | | |

According to a one embodiment, the conjugated compound comprises catechol violet, as shown in Table I. Catechol violet (CV) is a sulfone phthalein dye made from condensing two moles of pyrocatechol with one mole of o-sulfobenzoic acid anhydride. It has been found that CV has indicator properties and when incorporated into corrosion resistant compositions having metal ions, it forms complexes, making it useful as a chelometric reagent. As the composition containing the CV chelates metal ions, a generally blue to blue-violet color is observed.

According to another embodiment, xylenol orange, as shown in Table I is employed in the compositions of the present invention. It has been found that xylenol orange has metal ion indicator properties and when incorporated into corrosion resistant compositions having metal ions, it forms complexes, making it useful as a chelometric reagent. As the composition containing the xylenol orange chelates metal ions, a solution of xylenol orange turns from red to a generally blue color.

The conjugated compound may be present in the composition in an amount of from 0.01g/1000 g solution to 3 g/1000 g solution, such as 0.05g/1000 g solution to 0.3 g/1000 g solution.

In some embodiments of the present invention, the conjugated compound, if it changes color in response to a certain external stimulus, provides a benefit when using the current compositions, in that it can serve as a visual indication that a substrate has been treated with the composition. For example, a composition comprising an indicator that changes color when exposed to a metal ion that is present in the substrate will change color upon complexing with metal ions in that substrate; this allows the user to see that the substrate has been contacted with the composition. Similar benefits can be realized by depositing an alkaline or acid layer on a substrate and contacting the substrate with a composition of the present invention that changes color when exposed to an alkaline or acidic pH.

In addition, the use of certain conjugated compounds according to the present invention can provide the substrate with improved adhesion to subsequently applied coating layers. This is particularly true if the conjugated compound has hydroxyl functionality. Accordingly, some embodiments the present compositions allow for deposition of subsequent coating layers onto a substrate treated according to the present invention without the need for a primer layer. Such coating layers can include urethane coatings and epoxy coatings.

In some embodiments, a substrate may be treated with an alkaline deoxidizer, such as the alkaline deoxidizers, described in United States Application Number 13/235,317, and available from PRC-DeSoto International, Inc., Irvine, CA. The treated substrate, which can be aluminum, will have a residual alkaline pH. When a composition according to the invention, containing an indicator compound and a corrosion-inhibiting metal ion is then placed in contact with the deoxidized metal surface, the metal surface will undergo a color change to deep purple/blue. The corrosion-inhibiting composition itself will turn purple when in contact with the metal surface, such as when draining down the metal part. Once the reaction is "complete," the eluant composition turns back to red and the part retains its purple/blue color. Moreover, in certain embodiments the deposited inhibitor compound remains active on the surface of the substrate after deposition. Upon exposure to a corrosive environment, the inhibitor may migrate to the intermetallic cathodic sites to assist in corrosion resistance. This adds the extra benefit for inspection of substrate surfaces to determine if the substrate has been exposed to a corrosive environment. In certain embodiments, an indicator can be used that causes the corrosion sites to become more bright red in color, while protected areas will have the red color fade. The net result is the corrosion sites are easily visible with the red indicator color. Accordingly, corrosion sites can be readily observed and further treated to maintain a corrosion free surface for extending the useful life of the part.

In addition to the corrosion-inhibiting metal cation and conjugated compound, the present compositions may comprise a combination of two or more metal salts with different anions and/or cations. The compositions may further include other salts such as halides, carbonates, hydroxides, and phosphates of various metals. Other embodiments may optionally have an oxidizing agent, such as H₂O₂. In addition, the compositions may further have one or more additional additives that promote corrosion resistance or adhesion to the metal substrate, or the adhesion of subsequent coatings and can additionally contain additives to provide desired aesthetic or functional effects. An additive, if used, can constitute from about 0.01 weight percent up to about 80 weight percent of the total weight of the coating composition. Suitable additives can include a solid or liquid component admixed with the present compositions for the purpose of affecting one or more properties of the composition. Examples of additives include a surfactant, which can assist in wetting the metal substrate, and other additives that can assist in the development of a particular surface property, such as a rough or smooth surface. Other examples of suitable additives include flow control agents, thixotropic agents such as bentonite clay, gelatins, cellulose, anti-gassing agents, degreasing agents, anti-foaming agents, wetting agents, organic co-solvents, catalysts, dyes, amino acids, urea based compounds, complexing agents, valence stabilizers, reaction accelerators and fillers, such as those described in Paragraphs [0035] and [0036] of United States Patent Publication Number 2013/0034742, which paragraphs are hereby incorporated by reference, as well as other customary auxiliaries. Other optional ingredients include allantoin, polyvinylpyrrolidone, chelators, such as EDTA, TEA, citric acid, hexamethylenetetramine, thiourea, and/or an alcohol such as ethanol and/or isopropanol or azoles, such as 2,5-dimercapto-1,3,4-thiadiazole, 1H-benzotriazole, 1H-1,2,3-triazole, 2-amino-5-mercapto-1,3,4-thiadiazole, and 2-amino-1,3,4-thiadiazole. Other suitable additives known in the art of formulated surface coatings also can be used in the compositions according to the present invention, as will be understood by those of skill in the art with reference to this disclosure.

As noted above, the present compositions can be aqueous coating compositions. In one embodiment, the present compositions comprise an aqueous carrier, which optionally contains one or more organic solvents. Suitable solvents include propylene glycol, ethylene glycol, glycerol, low molecular weight alcohols, and the like.

In one embodiment, the present compositions additionally comprise a media, which is a surfactant, mixture of surfactants, or detergent-type aqueous solution, present in the composition in an amount from about 0.02 weight percent.

In one embodiment, the present compositions have a surfactant, mixture of surfactants, or detergent-type aqueous solution, and the composition is suitable for use in a metal substrate cleaning step and a conversion coating step in one process. In another embodiment, the conversion coating composition having a surfactant, mixture of surfactants, or detergent-type aqueous solution can additionally contain an oxidizing agent, as previously described herein.

In certain embodiments, the present composition is substantially or, in some cases, completely free of chromate and/or heavy metal phosphate. As used herein, the term "substantially free" when used in reference to the absence of chromate and/or heavy metal phosphate, such as zinc phosphate, in the pretreatment composition means that these substances are not present in the composition to such an extent that they cause a burden on the environment. That is, they are not substantially used and the formation of sludge, such as zinc phosphate, formed in the case of using a treating agent based on zinc phosphate, is eliminated. For the purposes of the present invention, a pretreatment composition having less than 1 weight percent of chromate and/or a heavy metal phosphate, wherein weight percent is based upon the total weight of the pretreatment composition, is considered "substantially free" of chromate and/or heavy metal phosphate. A composition having no chromate and/or heavy metal phosphate is "completely free" of such compounds.

The present invention is further directed to methods for treating a substrate. The methods generally comprise applying, to at least a portion of the substrate, any of the compositions described above. Any substrate can be treated according to the present invention. The substrate can be one that has been already treated in some manner, such as to impart visual and/or color effect.

Particularly suitable substrates are non-metallic and/or metal substrates. Suitable non-metallic substrates include polymeric, plastic, polyester, polyolefin, polyamide, cellulosic, polystyrene, polyacrylic, poly(ethylene naphthalate), polypropylene, polyethylene, nylon, EVOH, polylactic acid, other "green" polymeric substrates, poly(ethyleneterephthalate) ("PET"), polycarbonate, polycarbonate acrylobutadiene styrene ("PC/ABS"), polyamide, wood, veneer, wood composite, particle board, medium density fiberboard, cement, stone, glass, paper, cardboard, textiles, leather both synthetic and natural, and other nonmetallic substrates. Suitable metal substrates for use in the present invention include those that are often used in the assembly of automotive bodies, automotive parts, aerospace parts, and other articles, such as small metal parts, including fasteners, *i.e.,* nuts, bolts, screws, pins, nails, clips, buttons, and the like. Specific examples of suitable metal and metal alloy substrates also include, but are not limited to, cold rolled steel, hot rolled steel, steel coated with zinc metal, zinc compounds, or zinc alloys, such as electrogalvanized steel, hot-dipped galvanized steel, galvanealed steel, and steel plated with zinc alloy. Also, aluminum alloys, aluminum plated steel and aluminum alloy plated steel substrates may be used. Other suitable non-ferrous metals include copper and magnesium, as well as alloys of these materials. Moreover, in certain embodiments, the substrate may be a bare metal substrate, such as a cut edge of a substrate that is otherwise treated and/or coated over the rest of its surface. The metal substrate treated in accordance with the methods of the present invention may be in the form of, for example, a sheet of metal or a fabricated part.

The substrate to be treated in accordance with the methods of the present invention may first be cleaned to remove grease, dirt, or other extraneous matter. This is often done by employing mild or strong alkaline cleaners, such as are commercially available and conventionally used in metal pretreatment processes. Examples of alkaline cleaners suitable for use in the present invention include CHEMKLEEN 163, CHEMKLEEN 177, CHEMKLEEN 2010LP and CHEMKLEEN 490MX, each of which are commercially available from PPG Industries, Inc. Such cleaners are often followed and/or preceded by a water rinse.

In certain specific embodiments, the methods include performing an alkaline degreasing step, followed by an optional rinse step, after which is applied the composition of the present invention. In such embodiments, the use of a conjugated compound that is an indicator compound, particularly one that changes color when going from an acidic/neutral pH to an alkaline pH can be used. In this manner, the portion of the substrate on which the alkaline degrease composition is present will turn color upon application of the present coating composition. This enables the user to see what portion of the substrate has been coated by both the alkaline degreaser and the present composition and what portion has not.

While the above describes one particular embodiment in which an alkaline degreaser is used, many other steps can be employed within the scope of the present invention. For example, an alkaline degrease can be followed by an optional rinse step, which can then be followed by application of an alkaline etch step, an optional rinse step and a conversion coat. The alkaline etch step can be performed in any manner known to those skilled in the art, and can include, for example, a dwell time without rinsing for 7 - 10 minutes with an optional rinse step performed thereafter. The conversion coating may be any conversion coating known in the art, such as an anodized treatment, a rare earth conversion coating, a permanganate conversion coating, a zirconate, a titanate, or conversions based on trivalent chrome. Alternatively, an acidic deoxidation may be done instead of the alkaline etch step. The conversion coating step can be followed by an optional rinse step, and a sealing step. The sealing step can include application of any of the compositions of the present invention of which exemplary formulations are shown below in Table II. The formulations shown in Table II are given only by way of example, and other metal ions may be used in the compositions according to the invention as will be understood by those of skill in the art with reference to this disclosure.

**Table II. Exemplary Formulations Of the Present Compositions**

| **Formula 1. Rare Earth Formulation A** | | |
|---|---|---|
| **Compound** | **Amount** | **Example** |
| Indicator Compound | 0.005g-3g | 0.01g-.3g |
| Rare Earth Salt(s) total | 0.05g-240g | 0.1g-1g |
| Water | balance | balance |
| Total | 1000g | 1000g |

| **Formula 2. Rare Earth Formulation B** | | |
|---|---|---|
| Indicator Compound | 0.005g-3g | 0.01g-.3g |
| Yttrium Salt | 0.1g-15g | 1g-5g |
| Water | balance | balance |
| Total | 1000g | 1000g |

| **Formula 3. Zirconium/Zirconate Formulations** | | |
|---|---|---|
| Indicator Compound | 0.005g-3g | 0.01g-.3g |
| Zirconium/Zirconate Salt | 0.04g-10g | 0.8g-1g |
| Water | balance | balance |
| Total | 1000g | 1000g |

| **Formula 4. Lithium Formulations** | | |
|---|---|---|
| Indicator Compound | 0.005g-3g | 0.01g-.3g |
| Lithium Salt | 0.05g-16g | 1g-5g |
| Water | balance | balance |
| Total | 1000g | 1000g |

| **Formula 5. Zinc Formulations** | | |
|---|---|---|
| Indicator Compound | 0.005g-3g | 0.01g-.3g |
| Zinc Salt | 0.04g-10g | 0.8g-1g |
| Water | balance | balance |
| Total | 1000g | 1000g |

Any one or more of the above treatment steps can be performed as known in the art, such as through immersion, spraying, brush, pen and the like. Following application of the present compositions, the film coverage of the residue generally ranges from 1 to 1,000 milligrams per square meter, such as 10 to 400 milligrams per square meter. The thickness of the composition can vary, but it is generally thin, often having a thickness of less than 1 micrometer, and in some cases from 1 to 500 nanometers and in yet other cases 10 to 300 nanometers.

Following contact with the composition of the present invention, the substrate may, if desired, be rinsed with water and dried.

In certain embodiments of the present invention, after the substrate is contacted with the present compositions, it is then contacted with a coating composition comprising a film-forming resin. Any suitable technique may be used to contact the substrate with such a coating composition, including, for example, brushing, dipping, flow coating, spraying and the like. In certain embodiments, such contacting comprises an electrocoating step wherein an electrodepositable composition is deposited onto the metal substrate by electrodeposition. In the process of electrodeposition, the metal substrate being treated, serving as an electrode, and an electrically conductive counter electrode are placed in contact with an ionic, electrodepositable composition. Upon passage of an electric current between the electrode and counter electrode while they are in contact with the electrodepositable composition, an adherent film of the electrodepositable composition will deposit in a substantially continuous manner on the metal substrate. Methods of electrocoating are well known in the art.

As used herein, the term "film-forming resin" refers to resins that can form a self-supporting continuous film on at least a horizontal surface of a substrate upon removal of any diluents or carriers present in the composition or upon curing at ambient or elevated temperature. Conventional film-forming resins that may be used include, without limitation, those typically used in automotive OEM coating compositions, automotive refinish coating compositions, industrial coating compositions, architectural coating compositions, coil coating compositions, and aerospace coating compositions, among others.

In certain embodiments, the coating composition comprises a thermosetting film-forming resin. As used herein, the term "thermosetting" refers to resins that "set" irreversibly upon curing or crosslinking, wherein the polymer chains of the polymeric components are joined together by covalent bonds. This property is usually associated with a cross-linking reaction of the composition constituents often induced, for example, by heat or radiation. Curing or crosslinking reactions also may be carried out under ambient conditions. Once cured or crosslinked, a thermosetting resin will not melt upon the application of heat and is insoluble in solvents. In other embodiments, the coating composition comprises a thermoplastic film-forming resin. As used herein, the term "thermoplastic" refers to resins that comprise polymeric components that are not joined by covalent bonds and thereby can undergo liquid flow upon heating and are soluble in solvents.

Accordingly, the present invention is further directed to a substrate having deposited thereon a multi-layer coating system. In such multi-layer systems, at least one layer will be deposited from the compositions of the present invention. Any number of treatments, rinses and/or layers can be deposited before deposition of a layer from the current compositions. Similarly, any number of layers can be deposited after deposition of a layer from the current compositions. For example, the present invention is further directed to a substrate comprising a layer deposited from any of the compositions of the present invention, followed by one or more additional coating layers deposited on at least a portion thereof. As noted above, these coating layers can be any standardly known in the art of various industries, including, for example, the aerospace industry. These materials are typically polymeric polyols such as those prepared from polymerizing ethylenically unsaturated monomers including ethylenically unsaturated monomers containing active hydrogen groups such as hydroxyl groups. These polymers are conventionally known as hydroxyl-containing acrylic polymers. Examples of other suitable polymeric polyols are polyester polyols and polyether polyols. The polymeric polyols can be used in combination with polyisocyanate curing agents. Both the polymeric polyol and the polyisocyanate can be prepared from (cyclo)aliphatic materials. Other coating compositions are based on polyepoxides in combination with polyamine curing agents. Examples of particularly suitable coatings for use in the aerospace industry include, but are not limited to epoxy coatings and urethane coatings. In some embodiments, such coatings form topcoats. The term "topcoat" refers to a coating layer in a single or multi-layer coating system whose outer surface is exposed to the atmosphere or environment, and its inner surface is in contact with another coating layer or the substrate. Examples of suitable topcoats include those conforming to MIL-PRF-85285D, such as product code numbers Deft 03W127A and Deft 03GY292, available from PRC-DeSoto International, Inc., Irvine, CA. An example of a topcoat is an advanced performance topcoat, such as product code numbers Defthane® ELT™ 99GY001 and 99W009, available from PRC-DeSoto International, Inc., Irvine, CA. Examples of other suitable topcoats are those commercially available from PRC-DeSoto International, Inc. under the trademark DESOTHANE, including but not limited to polyurethane top coats include any of the DESOTHANE HS CA 8000 polyurethane top coats commercially available from PRC-DeSoto International, Inc. Other topcoats and advanced performance topcoats can be used in the coating system according to the present invention as will be understood by those of skill in the art with reference to this disclosure.

According to another embodiment, the multi-layer coating system comprises a primer coat. The compositions according to the present invention are compatible with conventional chromate based primer coat, such as product code 44GN072, available from PRC-DeSoto International, Inc., Irvine, CA. Alternately, the primer coat can be a chromate-free primer coat, such as the coating compositions described in US Pat. Nos. 7,601,425 and 7,759,419, and other chrome-free primers that are known in the art, such as those which can pass the military requirement of MIL-PRF-85582 Class N or MIL-PRF-23377 Class N, may also be used with the current invention. Primer coats are available from PRC-DeSoto International, Inc., Irvine, CA, product code numbers Deft 02GN083 or Deft 02GN084. The primer coat may be deposited onto the layer formed from the present invention, either with or without any intervening treatment and/or coating; a topcoat or other coating layer or layers may be deposited on the primer.

In yet another embodiment, the multi-layer coating system contains a self-priming topcoat, or an enhanced self-priming topcoat. The term "self-priming topcoat," also referred to as a "direct to substrate" or "direct to metal" coating can, as the name implies, be deposited onto a substrate, such as one treated with a composition of the present invention, without the need for a primer. The term "enhanced self-priming topcoat," also referred to as an "enhanced direct to substrate coating" refers to such a coating that comprises a mixture of functionalized fluorinated binders, such as a fluoroethylene-alkyl vinyl ether in whole or in part with other binder(s). Self-priming topcoats include those that conform to TT-P-2756A. Examples of self-priming topcoats are product code numbers 03W169 and 03GY369, available from PRC-DeSoto International, Inc., Irvine, CA. Examples of enhanced self-priming topcoats include DEFTHANE ELT / ESPT, available from PRC-DeSoto International, Inc., Irvine, CA. An example of a self-priming topcoat is product code number 97GY121, available from PRC-DeSoto International, Inc., Irvine, CA. Other self-priming topcoats and enhanced self-priming topcoats can be used in the coating system according to the present invention as will be understood by those of skill in the art with reference to this disclosure.

The subsequent coating layers applied over the layer deposited from the composition of the present invention, such as the primer, topcoat, self-priming topcoat, and enhanced self-priming topcoat and the like can be applied to the treated substrate, in either a wet or "not fully cured" condition that dries or cures over time, that is, solvent evaporates and / or there is a chemical reaction. The coatings can dry or cure either naturally or by accelerated means for example, an ultraviolet light cured system to form a film or "cured" paint. The coatings can also be applied in a semi or fully cured state.

The term "conversion coating," also referred to as a "conversion treatment" or "pretreatment", means a metal finishing process which involves the application of a coating (via spray, dip, rolling, etc.) to a metallic surface whereby the resulting coating is a combination of both the metal(s) in solution as well as the metal(s) of the metallic substrate. These terms include a treatment for a metal surface where a metal substrate is contacted at least in part with a solution, which may be an aqueous solution, having a metal that is a different element than the metal contained in the substrate. An aqueous solution having a metal element in contact with a metal substrate of a different element, where the substrate dissolves, leading to precipitation of a coating (optionally using an external driving force to deposit the coating on the metal substrate), is also within the meaning of the terms "conversion coating", "conversion treatment", and "pretreatment".

All amounts disclosed herein are given in weight percent of the total weight of the composition at 25°C and one atmosphere pressure, unless otherwise indicated.

As used herein, unless otherwise expressly specified, all numbers such as those expressing values, ranges, amounts or percentages may be read as if prefaced by the word "about", even if the term does not expressly appear. Any numerical range recited herein is intended to include all sub-ranges subsumed therein. Plural encompasses singular and vice versa. For example, while the invention has been described in terms of "a" corrosion-inhibiting metal cation, "a" conjugated compound, "an" indicator compound, and the like, mixtures of these and other components can be used. Also, as used herein, the term "polymer" is meant to refer to prepolymers, oligomers and both homopolymers and copolymers; the prefix "poly" refers to two or more. When ranges are given, any endpoints of those ranges and/or numbers within those ranges can be combined with the scope of the present invention. "Including", "such as", "for example" and like terms means "including/such as/for example but not limited to".

### ASPECTS OF THE INVENTION

The following numbered clauses summarize some aspects of the present invention.
1. A composition comprising:
   a) a corrosion-inhibiting metal cation; and
   b) a conjugated compound.
2. The composition of aspect 1, wherein the corrosion-inhibiting metal cation comprises a rare earth salt.
3. The composition of aspect 2, wherein the rare earth salt comprises a praseodymium, cerium and/or yttrium salt.
4. The composition of aspect 1, wherein the corrosion-inhibiting metal cation comprises a lithium salt.
5. The composition of aspect 1, wherein the composition further comprises an azole compound.
6. The composition of aspect 1, wherein the conjugated compound comprises an indicator compound.
7. The composition of aspect 5, wherein the indicator compound changes color when exposed to a metal ion.
8. The composition of aspect 6, wherein the indicator compound changes color when exposed to an alkaline pH.
9. The composition of aspect 6, wherein the indicator compound changes color when exposed to an acidic pH.
10. The composition of aspect 6, wherein the conjugated compound comprises catechol violet and/or xylenol orange and/or hematoxylin.
11. The composition of aspect 1, wherein the conjugated compound does not comprise a fluorescent indicator.
12. The composition of aspect 1, wherein the composition additionally comprises an oxidizing agent and/or polyvinylpyrrolidone.
13. The composition of aspect 1, wherein the composition is substantially free of chromate and/or heavy metal phosphate.
14. The composition of aspect 1, wherein the composition is completely free of chromate and/or heavy metal phosphate.
15. A method for treating a substrate comprising:
   a) applying to at least a portion of the substrate the composition of aspect 1.
16. The method of aspect 15, wherein the method further comprises treating the substrate prior to the application of the composition of Claim 1.
17. The method of aspect 15, wherein treating the substrate prior to the application of the composition of aspect 1 comprises rendering at least a portion of the surface of the substrate alkaline.
18. The method of aspect 15, wherein treating the substrate prior to the application of the composition of aspect 1 comprises rendering at least a portion of the surface of the substrate acidic.
19. The method of aspect 15, wherein treating the substrate prior to the application of the composition of aspect 1 comprises applying a conversion coating to the substrate.
20. The method of aspect 14, wherein the substrate comprises metal.
21. The method of aspect 14, wherein the substrate is non-metallic.
22. A substrate treated according to the method of aspect 15.
23. A substrate comprising:
   a) a layer deposited from the composition of aspect 1;
   b) a coating layer deposited on at least a portion thereof.
24. The substrate of aspect 23, wherein the coating layer of component b comprises epoxy.
25. The substrate of aspect 24, wherein the coating layer of component b comprises urethane.

### EXAMPLES

Examples of compositions that can be made and that are within the scope of the present invention are disclosed below. It will be appreciated that these examples are not exhaustive and other compositions are within the scope of the invention as well.

### Example 1

Certain embodiments of the present compositions can comprise an indicator compound and one or more rare earth element ions. According to this embodiment, the composition may comprise an aqueous carrier, an indicator compound, and first and second rare earth element salts, each salt comprising an anion and a cation, the anion of the first and second salts being different, and the cation of the first and second salts being the same or different, wherein each cation, individually, is a rare earth element. It has been found that rare earth element salts, such as praseodymium, cerium, neodymium, samarium, and terbium salts, when incorporated into conversion coating compositions, where the salts are mixtures of multiple anions, such as a halide and a nitrate, are significantly influential on the deposition parameters of the resulting rare earth element coating, including the resulting coating's morphology and performance although the inventor does not wish to be bound by this. The compositions according to this embodiment comprise an indicator compound, at least one rare earth element salt, such as cerium or both cerium and yttrium, and a combination of nitrate and halide ions, and optionally an oxidizing agent such as H₂O₂. The compositions will have a neutral pH.

**Rare Earth Element Compositions**

| **Compound** | **Composition 1¹** | **Composition 2¹** | **Composition 3¹** | **Composition 4¹** |
|---|---|---|---|---|
| YNO₃ | 0.062 | 0.297 | 0.062 | 0.297 |
| CeNO₃ | 0.056 | 0.267 | 0.056 | 0.267 |
| CeCh | 0.006 | 0.03 | 0.006 | 0.03 |
| Hematoxylin hydrate | 0.1 | 0.475 | -- | -- |
| Catechol Violet | -- | -- | 0.05 | 0.238 |
| H₂O₂ | 1 drop | 1 drop | 1 drop | 1 drop |
| DI water | balance | balance | balance | balance |
| Total | 800 | 3800 | 800 | 3800 |

| | | | | |
|---|---|---|---|---|
| Compositions shown in this table will have a neutral pH. | | | | |

### Example 2

According to other embodiments of the invention, the compositions can comprise an aqueous carrier, an indicator compound, and a metal ion comprising zirconium ions, such as zirconyl nitrate and hexafluorozirconate or a combination thereof. Other salts, particularly a metal nitrate, such as yttrium may be added to the composition according to this embodiment. Additives for this composition include a halide source, surfactants and polyvinylpyrrolidone. Compositions according to this embodiment are shown in the table below.

**Zirconium Compositions.**

| **Compound** | **Composition 5¹** |
|---|---|
| Hexafluorozirconate | 0.48 |
| Catechol Violet | 0.01 |
| DI water | balance |
| Total | 800 |

| | |
|---|---|
| ¹Compositions shown in this table IV will have a neutral pH. | |

### Example 3

According to another embodiment of the invention, the compositions can comprise an aqueous carrier, an indicator compound, and a metal ion comprising Group IA metal ions, such as lithium, sodium and potassium or a combination thereof. The Group IA based coating compositions may further comprise counter ions such as hydroxide, halide, phosphate, and carbonate ions or a combination thereof. In one embodiment, the composition can comprise an aqueous carrier, an indicator compound, and a lithium ion, such as lithium carbonate. Compositions according to this embodiment can further include a halide source, such as a fluoride source, for example, zinc fluoride. Exemplary compositions are shown in the table below.

**Lithium Compositions**

| **Compound** | **Composition 6¹** |
|---|---|
| Lithium Carbonate | 1.6g |
| Catechol Violet | 0.0105g |
| DI water | balance |
| Total | 800g |

| | |
|---|---|
| ¹Compositions shown in Table V will have an alkaline pH. | |

Whereas particular embodiments of this invention have been described above for purposes of illustration, it will be evident to those skilled in the art that numerous variations of the details of the present invention may be made without departing from the invention as defined in the appended claims.

## Claims

1. A composition comprising:
a corrosion-inhibiting metal cation comprising trivalent chromium;
a conjugated compound; and
an aqueous medium.

2. The composition of Claim 1, wherein the conjugated compound is present in an amount of 0.01g/1000 g composition to 3g/1000 g composition.

3. The composition of Claim 1 or 2, wherein the metal cation is present in an amount of 10 ppm to 5000 ppm based on total weight of the composition.

4. The composition of any of the preceding Claims, wherein the conjugated compound comprises an indicator compound.

5. The composition of Claim 4, wherein the indicator compound changes color when:
- exposed to a metal ion; or
- exposed to an alkaline pH; or
- exposed to an acidic pH.

6. The composition of any of the preceding Claims, wherein the corrosion-inhibiting metal cation further comprises:
- a rare earth metal cation;
- a Group IA metal cation;
- a Group IIA metal cation;
- a Group IIB metal cation; and/or
- a Group IVB metal cation.

7. The composition of any of the preceding Claims, further comprising:
- an oxidizing agent; and/or
- an additive.

8. The composition of any of the preceding Claims, wherein the composition is substantially free of chromate and/or heavy metal phosphate.

9. A method for treating a substrate comprising applying to at least a portion of the substrate the composition of any of the preceding Claims.

10. The method of Claim 9, wherein the method further comprises treating the substrate prior to the application of the composition of Claims 1 to 8.

11. The method of Claim 10, wherein the treating the substrate prior to the application of the composition comprises:
- rendering at least a portion of the surface of the substrate alkaline; or
- rendering at least a portion of the surface of the substrate acidic; or
- applying a conversion coating to the substrate.

12. A substrate treated according to the method of any of Claims 9 to 11.

13. The substrate of Claim 12, comprising:
a layer deposited from the composition of any of Claims 1 to 8; and
a coating layer deposited on at least a portion thereof.

14. The substrate of Claim 13, wherein the coating layer comprises an epoxy.

15. The substrate of Claim 14, wherein the coating layer comprises urethane.
